# FASCICULE DE BREVET EUROPEEN

(11) **EP 1 291 127 B1**
(45) Date de publication et mention de la délivrance du brevet: **21.02.2007**
(21) Numéro de dépôt: 01810873.8
(22) Date de dépôt: 10.09.2001
(51) Int. Cl.: B23Q 7/04, B23B 13/02

(54) **Dispositif de chargement de barres et d'extraction de chutes par ravitailleur**
Zuführvorrichtung zum Zuführen von Stangen und Entfernen von Abfallstücken
Feeding device for loading bars and removing end-pieces

(43) Date de publication de la demande: 12.03.2003
(73) Titulaire: LNS S.A., 2534 Orvin (CH)
(72) Inventeur: Scemama, Philippe, 2525 Le Landeron (CH)
(74) Mandataire: BOVARD AG

(56) Documents cités:
- EP-A- 0 155 233
- EP-A- 0 161 210
- EP-A- 0 559 094
- EP-A- 0 940 207
- DE-A- 3 128 958
- FR-A- 2 049 920
- US-A- 4 088 220
- US-A- 6 070 534
- US-B1- 6 199 461

## Description

L'invention se rapporte à une installation de chargement séquentiel de barres de matériau dans une partie rotative tubulaire d'une machine d'usinage de ces barres, connue du document EP 0 940 207 A. Ce document décrit une installation selon le préambule de la revendication 1.

Dans le domaine de la fabrication mécanique, il est connu de produire des pièces sur des machines de tournage automatiques, à partir de barres de matériau, et ce, en procédant à des usinages successifs de portions longitudinales de ces barres.

Les installations de chargement du type précité sont connues dans ce domaine, sous le nom de « ravitailleurs » et servent au ravitaillement de telles machines automatiques de tournage, utilisées en production industrielle.

La partie rotative tubulaire d'une telle machine d'usinage qui accueille une barre est, quant à elle, dite broche.

Ces installations de chargement de barres comprennent classiquement et notamment:
- un premier dispositif destiné à assurer une fonction combinant des actions de soutien et de guidage d'une barre, notamment pendant sa rotation, et ce, au cours d'un déplacement en translation de cette barre selon un axe déterminé, dit axe de guidage, notamment sensiblement coaxial à la partie rotative tubulaire de la machine d'usinage qui doit être traversée par ladite barre, afin d'être présentée à un système d'outils situé dans cette machine,
- un deuxième dispositif destiné à assurer une fonction de stockage d'une pluralité de barres,
- un troisième dispositif destiné à assurer des fonctions de sélection et de prélèvement d'une barre dans ce magasin, puis de placement de cette barre dans le dispositif de guidage en translation,
- un quatrième dispositif destiné à assurer des fonctions de déplacement en translation de la barre chargée dans le dispositif de guidage, de manière à engendrer sélectivement,
   . le déplacement de cette barre, au moins dans le dispositif de guidage, de manière à la disposer dans une position dite d'attente de chargement,
   . la poussée de la barre, par séquence, à la fois à travers ledit dispositif de guidage et la partie rotative tubulaire de la machine d'usinage, depuis ladite position dite d'attente de chargement jusqu'à ce qu'un nombre déterminé de pièces ait été réalisé,
   . l'extraction de la partie rotative tubulaire d'un tronçon de barre qui n'aurait pas été utilisé dans la machine d'usinage,
   . le déplacement dudit tronçon non utilisé jusqu'à une dernière position, telle celle d'un poste d'évacuation de ce tronçon.

De préférence, l'installation comprend également un cinquième dispositif de commande programmable des dispositifs précités.

La demanderesse construit et commercialise notamment une installation de chargement de barres sous la dénomination commerciale « LNS EXPRESS 326 ».

Dans le dispositif destiné à assurer les fonctions de déplacement en translation d'une barre placée dans le dispositif de guidage de cette installation :
- le premier appareil, mobile en translation selon une direction sensiblement parallèle à l'axe de la partie rotative tubulaire, porte une pince de préhension transversale de la barre, est relié à une chaîne sans fin d'un premier ensemble pignons et chaîne sans fin, de manière à être déplacé en translation lors du déplacement de cette chaîne, du fait de l'entraînement en rotation d'un des pignons avec lequel elle coopère,
- le deuxième appareil, mobile en translation selon une direction sensiblement parallèle à l'axe de la partie rotative tubulaire, porte une pince tournante de maintien de l'extrémité arrière d'une barre, est relié à une chaîne sans fin d'un deuxième ensemble pignons et chaîne sans fin, de manière à être déplacé en translation lors du déplacement de cette chaîne, du fait de l'entraînement en rotation d'un des pignons avec lequel elle coopère.
   Dans ce dispositif de déplacement en translation, un moyen moteur unique est utilisé pour entraîner sélectivement en rotation l'un des pignons de l'un ou l'autre desdits premier et deuxième ensemble pignons et chaîne sans fin.
   Cela exige que le dispositif de déplacement en translation d'une barre placée dans le dispositif de guidage comprenne un mécanisme d'entraînement sélectif desdits pignons.
   La présence de ce mécanisme de sélection est pénalisant au plan de l'encombrement et du coût de revient du dispositif de déplacement en translation.
   Un résultat que l'invention vise à obtenir est une installation du type précité dont la structure est notablement simplifiée et dont l'encombrement et le coût de fabrication sont réduits par rapport à ceux de l'installation de l'état de l'art indiqué.
   A cet effet, l'invention a pour objet une installation selon la revendication 1.

L'invention sera bien comprise à la lecture de la description ci-après faite à titre d'exemple non limitatif, en regard du dessin ci-annexé qui représente :

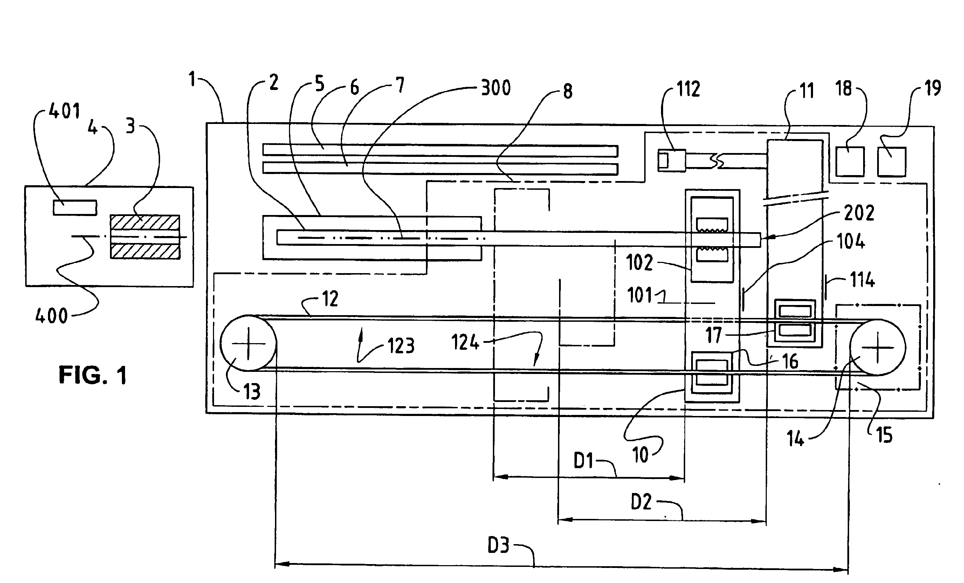

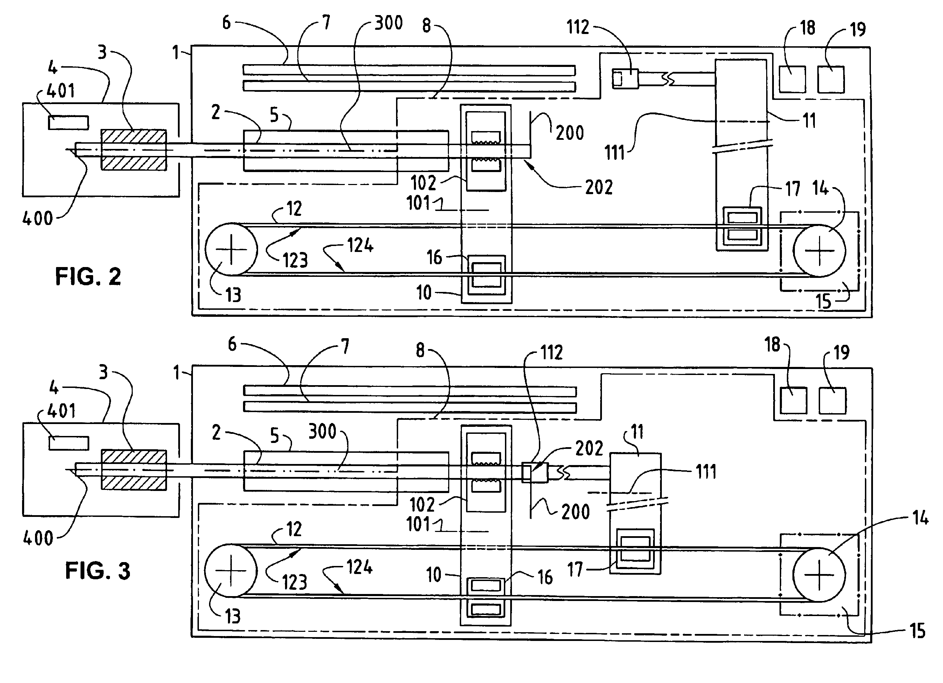

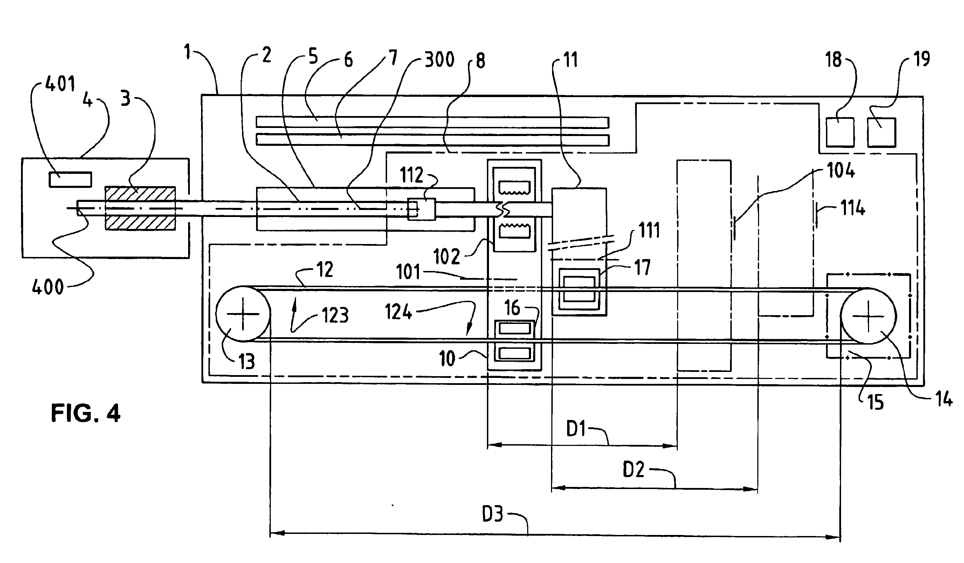

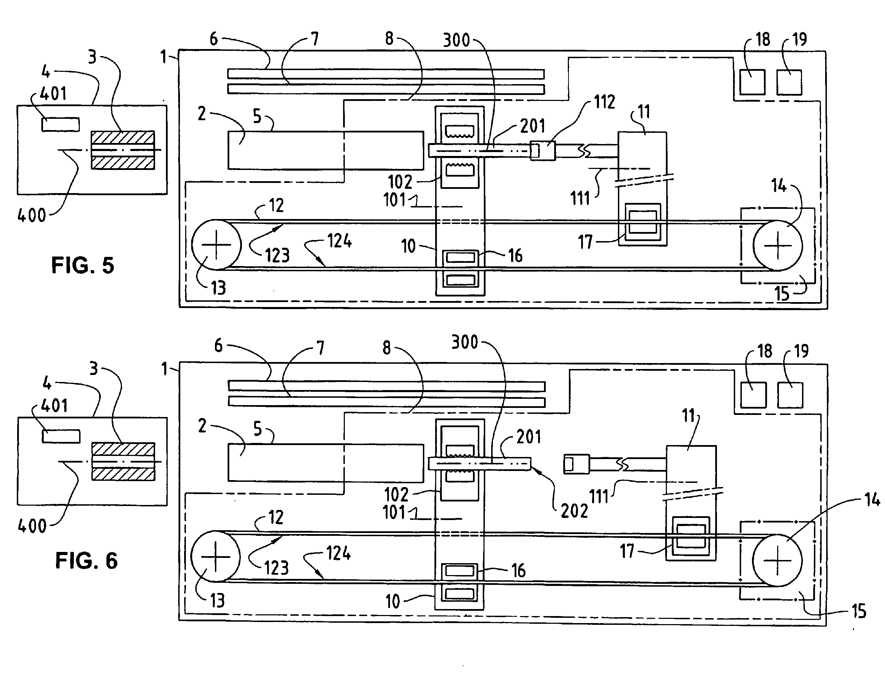

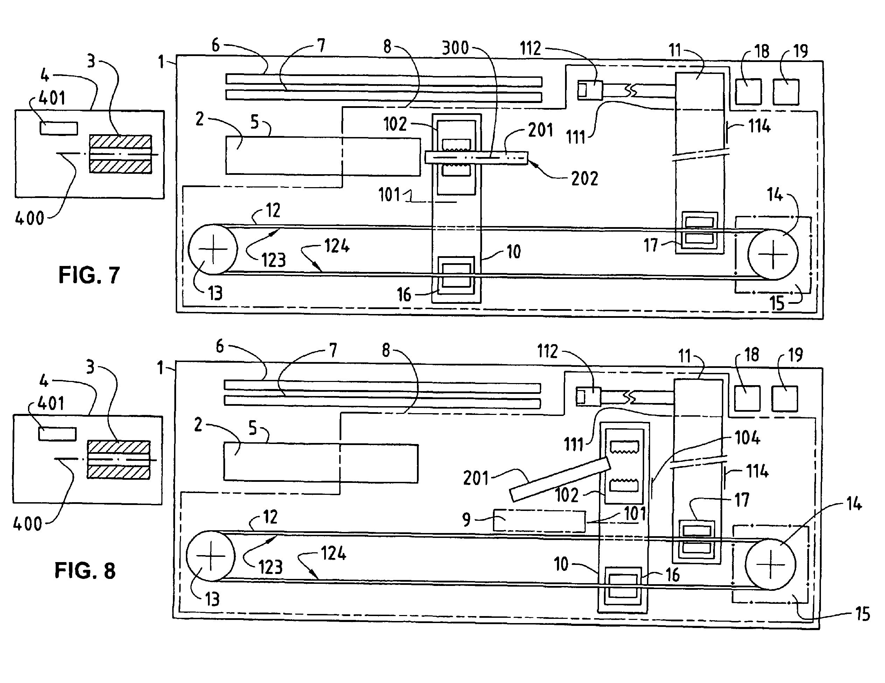

Figures 1 à 8, schématiquement représentée à différentes phases son fonctionnement, une installation de chargement séquentiel de barres de matériau dans une partie rotative tubulaire d'une machine d'usinage de ces barres, cette installation comprenant un dispositif de déplacement en translation desdites barres.
Figure 9, vue en perspective, une partie du dispositif de déplacement en translation de barres schématisé aux figures 1 à 8,
Figures 10 et 11, deux vues de face et dans deux situations de fonctionnement, d'un détail de réalisation de la partie du dispositif de déplacement en translation de barres représentée en figure 9.

En se reportant au dessin, on voit une installation 1 de chargement séquentiel de barres 2 de matériau dans une partie rotative tubulaire 3 d'une machine d'usinage 4 de ces barres 2, telle une machine de tournage 4.

L'installation 1 de chargement de barres 2 comprend classiquement:
- un premier dispositif 5, dit de guidage en translation, destiné à assurer une fonction combinant des actions de soutien et de guidage d'une barre 2, notamment pendant sa rotation, et ce, au cours d'un déplacement en translation de cette barre 2 selon un axe déterminé 300, dit axe de guidage 300, notamment sensiblement coaxial à celui 400 de la partie rotative tubulaire 3 de la machine d'usinage 4 qui doit être traversée par ladite barre 2, afin d'être présentée à un système d'outils 401 situé dans cette machine 4,
- un deuxième dispositif 6 destiné à assurer une fonction de stockage d'une pluralité de barres 2,
- un troisième dispositif 7 destiné à assurer des fonctions de sélection et de prélèvement d'une barre 2 dans ce dispositif de stockage 6, puis de placement de cette barre 2 dans le dispositif 5 de guidage en translation,
- un quatrième dispositif 8 destiné à assurer des fonctions de déplacement en translation de la barre 2 chargée dans le dispositif 5 de guidage en translation, de manière à engendrer sélectivement,
   . le déplacement de cette barre 2, au moins dans le dispositif 5 de guidage en translation, de manière à la disposer dans une position dite d'attente de chargement 200,
   . la poussée de la barre 2, par séquence, à la fois à travers ledit dispositif 5 de guidage en translation et la partie rotative tubulaire 3, depuis ladite position dite d'attente de chargement 200 jusqu'à ce qu'un nombre déterminé de pièces ait été réalisé,
   . l'extraction de la partie rotative tubulaire 3 d'un tronçon de barre 201 qui n'aurait pas été utilisé dans la machine d'usinage 4,
   . le déplacement dudit tronçon de barre 201 non utilisé jusqu'à un poste 9 d'évacuation de ce tronçon de barre 201.

Sur les figures, lesdits premier, deuxième et troisième dispositifs 5, 6, 7 ont été simplement symbolisés par des rectangles car les détails structuraux de ces dispositifs ne concernent pas l'objet de la présente demande.

Le quatrième dispositif 8 destiné à assurer les fonctions de déplacement en translation d'une barre 2 placée dans le dispositif 5 de guidage en translation comprend, d'une part, au moins deux appareils de déplacement distincts 10, 11, dits premier 10 et deuxième 11, chacun destiné à venir successivement coopérer avec une partie dite arrière 202 d'une barre 2 à déplacer en translation et, d'autre part, des éléments moteurs 12 à 14 en vue du déplacement de ces dits premier et deuxième appareils 10, 11 chacun sur une distance déterminée, dites première et seconde distance D1, D2, ces premier et deuxième appareils 10, 11 et éléments moteurs 12 à 14 étant organisés et commandés de manière à assurer distinctement leur fonction et notamment :
- au moins la fonction de déplacement en translation de la barre 2, au moins dans le premier dispositif 5 dit de guidage, de manière à l'amener dans une position dite d'attente de chargement 200 et,
- au moins la fonction de poussée de la barre 2 par séquence, à la fois à travers ledit dispositif de guidage 5 et la partie rotative tubulaire 3 de la machine 4, et ce, depuis la position d'attente de chargement 200.

L'installation 1 comprend évidemment une structure, tel un châssis, mais cette structure n'étant pas l'objet de l'invention, elle n'a pas été représentée et l'installation a été globalement symbolisée par un rectangle, repéré 1, dans lequel ont été représentées et/ou symbolisées certaines de ses différentes parties fonctionnelles et notamment celles objet de l'invention.

Tel que cela est représenté,
- le premier appareil 10 est mobile en translation selon une première direction 101 sensiblement parallèle à l'axe de guidage 300 de la barre 2 et porte une pince 102 de préhension transversale de l'extrémité arrière d'une barre 2,
- le deuxième appareil 11 est mobile en translation selon une deuxième direction 111 sensiblement parallèle l'axe de guidage 300 de la barre 2 et porte une pince tournante 112 de maintien de l'extrémité arrière d'une barre 2,
- les déplacements de chacun de ces premier et deuxième appareils 10, 11 étant assurés par circulation d'un élément sans fin 12 sur des éléments de renvoi 13, 14, et ce, lors de l'entraînement en rotation d'un desdits éléments de renvoi par un organe moteur 15.

Lesdits premier et second appareils 10 et 11 ont été représenté de manière relativement symbolique car l'invention concerne l'aspect structurel de ces appareils.

Egalement, bien qu'il ait été indiqué que lesdits premier et deuxième appareils 10, 11 sont mobiles en translation, aucun moyen de guidage en translation n'a été représenté de manière à ne pas surcharger les dessins.

Ces moyens de guidage peuvent être de tout type connu et ne font pas partie de l'invention.

De manière remarquable, le dispositif de déplacement 8 comprend :
- un ensemble fonctionnel constitué d'un élément sans fin 12 et d'éléments de renvoi 13, 14, cet ensemble fonctionnel étant commun aux dits premier 10 et deuxième appareil 11 et s'étendant sur une distance D3 au moins suffisante pour assurer les déplacements successifs de chacun desdits premier et deuxième appareil 10, 11 sur la première distance D1 et la deuxième distance D2 de déplacement souhaitée pour chacun d'eux,
- des appareils dits premier 10 et deuxième 11 qui sont chacun équipé d'un moyen commandé de liaison locale débrayable 16, 17 avec l'élément sans fin 12,
- un moyen de commande sélective 18 des moyens de liaison locale débrayable 16, 17 avec l'élément sans fin 12.

Ces caractéristiques techniques permettent d'obtenir un dispositif 8 de déplacement en translation du type précité dont la structure est notablement simplifiée.

Par l'expression commande sélective, on désigne tout type de commande y compris une commande au moins indirecte, c'est à dire une commande qui génère directement ou indirectement l'action de débrayage ou d'embrayage recherchée.

Bien que cela n'apparaisse pas sur les dessins, le respect des caractéristiques techniques précitées permet d'obtenir un dispositif de déplacement en translation 8 dont l'encombrement et le coût de fabrication sont réduits par rapport à ceux du dispositif de l'état de l'art indiqué.

Dans une forme préférée de réalisation, l'élément sans fin 12 consiste en une chaîne de type à rouleaux cylindriques 121 et maillons latéraux 122.

De manière remarquable, le moyen de liaison locale débrayable 16 qui équipe ledit premier appareil 10 pourvu d'une pince 102 de préhension transversale de l'extrémité arrière d'une barre 2, comprend :
- un élément denté et mobile 161 situé latéralement à la chaîne et guidé entre deux positions dont,
   . une position 1601, dite active, dans laquelle il retient au moins un rouleau cylindrique 121 de l'élément sans fin 12 en vue d'interdire tout déplacement relatif entre cet élément sans fin 12 et le premier appareil 10,
   . une position 1602, dite passive, dans laquelle il libère au moins ce rouleau 121 en vue d'autoriser un déplacement relatif entre ledit élément sans fin 12 et ledit premier appareil 10,
- un élément d'appui 162 de l'élément sans fin 12 qui est situé de manière à s'opposer à un déplacement dudit élément sans fin 12, lorsque l'élément denté et mobile 161 est déplacé dans sa position 1601 dite active,
- un organe commandé 163 de déplacement énergique de l'élément denté et mobile 161 entre ses deux positions 1601, 1602 active et passive.

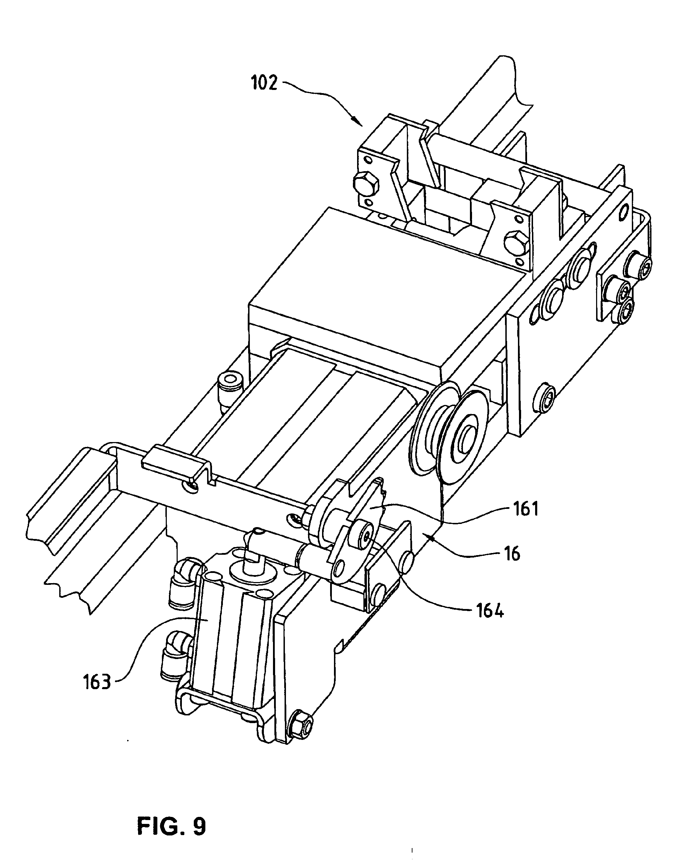

Par exemple, l'organe commandé 163 consiste en un vérin, tel un vérin pneumatique (figure 9).

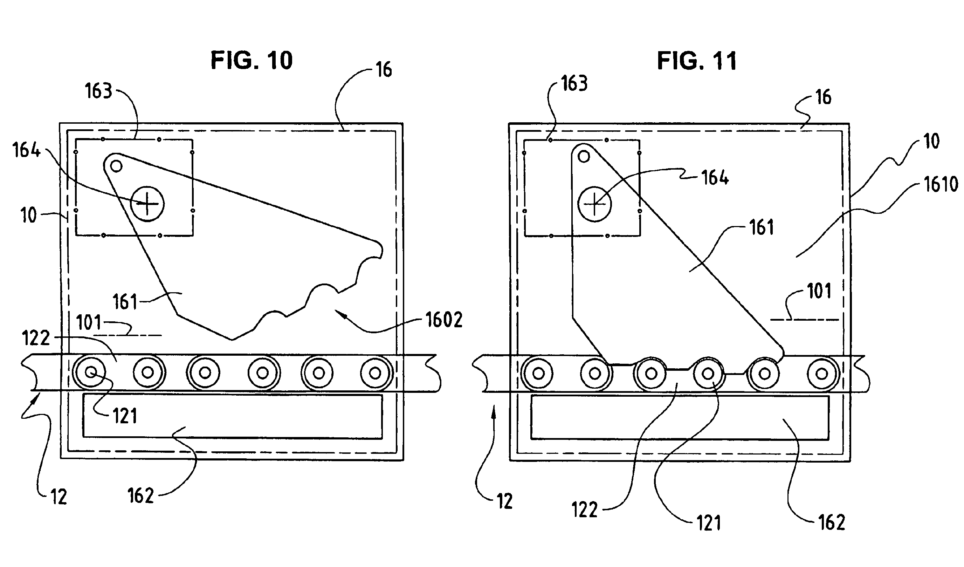

Dans une forme préférée de réalisation (figures 9 à 11), l'élément denté mobile 161 situé latéralement à l'élément sans fin 12 est constitué par un secteur denté articulé sur un axe 164, de manière à osciller entre les deux positions prédéfinies dites active 1601 et passive 1602.

De manière encore remarquable,
- d'une part, l'élément sans fin 12 forme une boucle sur les deux éléments de renvoi 13, 14 et présente deux brins sensiblement parallèles 123, 124, et
- d'autre part, le moyen de liaison locale débrayable 16 du premier appareil 10 coopère avec l'un des brins et le moyen de liaison locale débrayable 17 du second appareil 11 coopère avec l'autre brin, de manière telle que lorsque ces appareils 10, 11 sont simultanément embrayés sur l'élément sans fin 12, ils se déplacent dans des directions opposées.

Dans un mode préféré de réalisation, le moyen de liaison locale débrayable 17 du deuxième appareil 11 consiste en un moyen du type dit à « drapeau ».

De préférence, l'installation comprend un cinquième dispositif 19 de commande programmable au moins :
- du troisième dispositif 7 destiné à assurer des fonctions de sélection et de prélèvement d'une barre 2 dans le dispositif de stockage 6, puis de placement de cette barre 2 dans le dispositif 5 de guidage en translation,
- du quatrième dispositif 8 destiné à assurer des fonctions de déplacement en translation de la barre 2 chargée dans le dispositif 5 de guidage en translation.
   De manière remarquable, le cinquième dispositif 19 de commande programmable et le moyen de commande sélective 18 des moyens de liaison locale débrayable 16, 17 avec l'élément sans fin 12 produisent des ordres de commande en relation avec le fonctionnement desdits troisième et quatrième dispositif 7 et 8 de manière telle que la séquence d'opérations suivante soit assurée, en prenant comme référence une position desdits premier et second appareils 10, 11 qui consiste en une position de recul maximum 104, 114 de chacun de ces appareils 10, 11, par rapport à la machine d'usinage 4,
- le maintien en une position débrayée du moyen de liaison débrayable 17 du deuxième appareil 11 avec l'élément sans fin 12,
- l'ouverture de la pince 102 de préhension transversale qui est portée par le premier appareil 10,
- la sélection et le prélèvement d'une barre 2 dans le dispositif de stockage 6, puis le dépôt de cette barre 2 dans le dispositif 5 de guidage en translation,
- la fermeture de la pince 102 de préhension qui est portée par le premier appareil 10,
- le déplacement du premier appareil 10 et d'une barre 2 retenue dans sa pince 102, et ce, sur la première distance D1, de manière à disposer la barre 2 dans sa position dite d'attente de chargement 200,
- l'ouverture de la pince 102 de préhension transversale de l'extrémité arrière de la barre 2 qui est portée par le premier appareil 10,
- l'actionnement en position débrayée du moyen de liaison débrayable 16 du premier appareil 10 avec l'élément sans fin 12,
- l'actionnement en position embrayée du moyen de liaison débrayable 17 du deuxième appareil 11 avec l'élément sans fin 12,
- le déplacement dudit deuxième appareil 11, sur une première fraction de la deuxième distance D2, et ce, jusqu'à l'accouplement de sa pince tournante 112 de maintien avec la partie arrière 202 de la barre 2 telle que située dans sa position dite d'attente de chargement 200,
- le déplacement du deuxième appareil 11, sur une deuxième fraction de la deuxième distance D2, et ce, de manière à engendrer la poussée de la barre 2, par séquence, à la fois à travers ledit dispositif 5 de guidage en translation et la partie rotative tubulaire 3, depuis ladite position dite d'attente de chargement 200 de la barre 2, jusqu'à ce qu'un nombre déterminé de pièces ait été réalisé,
- le déplacement du deuxième appareil 11 induisant son retour vers une position telle qu'un tronçon de barre 201 qui n'aurait pas été utilisé dans la machine d'usinage 4 soit extrait de sa partie rotative tubulaire 3 et se retrouve placé en position d'être transversalement saisi par la pince de préhension transversale 102 du premier appareil 10,
- la fermeture de la pince 102 de préhension transversale sur le tronçon de barre 201 non utilisé,
- le déplacement dudit second appareil 11 vers sa position dite de recul maximum 114 de manière à induire, d'une part, la libération du tronçon de barre 201 jusqu'alors retenu dans la pince tournante 112 et, d'autre part, le placement dudit deuxième appareil 11 dans sa positon de recul maximum 114,
- l'actionnement en position débrayée du moyen de liaison débrayable 17 du deuxième appareil 11 avec l'élément sans fin 12,
- l'actionnement en position embrayée du moyen de liaison débrayable 16 du premier appareil 11 avec l'élément sans fin 12,
- le déplacement dudit premier appareil 10 vers sa position de recul maximum 104 et le placement dudit deuxième dispositif 11 dans ladite position,
- l'ouverture de la pince 102 de préhension transversale qui est portée par le premier appareil 10.

Le poste 9 d'évacuation d'un tronçon de barre 201 non utilisé est avantageusement constitué à l'aplomb de la position de recul maximum 104 du premier appareil 10 de manière à recueillir le tronçon libéré lors de l'ouverture de la pince 102, lorsque le premier appareil 10 est placé dans cette position de recul maximum 114.

## Revendications

1. Installation de chargement séquentiel de barres (2) de matériau dans une partie rotative tubulaire (3) d'une machine d'usinage (4) de ces barres (2), cette installation comprenant un quatrième dispositif (8) destiné à assurer des fonctions de déplacement en translation d'une barre (2) située dans un premier dispositif (5) de guidage en translation de cette barre (2) selon un axe de guidage (300),
ce dispositif (8) de déplacement en translation d'une barre (2) comprenant,
- un premier appareil (10) mobile en translation selon une première direction (101) sensiblement parallèle à l'axe de guidage (300) de la barre (2) et destiné à être déplacé sur une première distance déterminée (D1), et un deuxième appareil (11) mobile en translation selon une deuxième direction (111) sensiblement parallèle à l'axe de guidage (300) de la barre (2) et destiné à être déplacé sur une deuxième distance déterminée (D2), les déplacements de chacun de ces premier et deuxième appareils (10, 11) étant assurés par circulation d'un élément sans fin (12) sur des éléments de renvoi (13, 14), et ce, lors de l'entraînement en rotation d'un desdits éléments de renvoi par un organe moteur (15), un ensemble fonctionne étant constitué de l'élément sans fin (12) et des éléments de renvoi (13, 14), étant commun aux dits premier (10) et deuxième appareils (11) et s'étendant sur une distance (D3) au moins suffisante pour assurer les déplacements successifs de chacun desdits premier et deuxième appareils(10, 11) sur la première distance (D1) et la deuxième distance (D2) de déplacement souhaitée pour chacun d'eux, et les appareils dits premier (10) et deuxième (11) étant chacun équipé d'un moyen commandé de liaison locale débrayable (16, 17) avec l'élément sans fin (12), et
- un moyen de commande sélective (18) des moyens de liaison locale débrayable (16, 17) avec l'élément sans fin (12),
cette installation de chargement séquentiel de barres de matériau étant **caractérisée en ce que**
- l'axe de guidage déterminé (300) est sensiblement coaxial à la partie rotative tubulaire (3) de la machine d'usinage (4) qui doit être traversée par ladite barre (2) en vue de l'usinage de pièces,
- l'installation comprend un deuxième dispositif (6) de stockage d'une pluralité de barres (2), et un troisième dispositif (7) de sélection et de prélèvement de la barre (2) dans le dispositif de stockage (6), puis de placement de cette barre (2) dans le dispositif (5) de guidage en translation, et
- le quatrième dispositif (8), dit de déplacement en translation de la barre (2) placée dans le dispositif (5) de guidage en translation, met en oeuvre :
. d'une part, le premier appareil (10) qui, mobile en translation selon la première direction (101) sensiblement parallèle à l'axe de guidage (300) de la barre (2), porte une pince (102) de préhension transversale de l'extrémité arrière de la barre (2), et
. d'autre part, le deuxième appareil (11) qui, mobile en translation selon la deuxième direction (111) sensiblement parallèle à l'axe de guidage (300) de la barre (2), porte une pince tournante (112) de maintien de l'extrémité arrière de la barre (2).

2. Installation selon la revendication 1, le dispositif (8) destiné à assurer des fonctions de déplacement d'une barre (2) étant destiné à être utilisé avec un élément sans fin qui consiste en une chaîne de type à rouleaux cylindriques (121) et maillons latéraux (122), cette installation étant **caractérisée en ce que** le moyen de liaison locale débrayable (16) qui équipe ledit premier appareil (10) pourvu d'une pince (102) de préhension transversale de l'extrémité arrière d'une barre (2), comprend :
- un élément denté et mobile (161) situé latéralement à la chaîne et guidé entre deux positions dont,
. une position (1601), dite active, dans laquelle il retient au moins un rouleau cylindrique (121) de l'élément sans fin (12) en vue d'interdire tout déplacement relatif entre cet élément sans fin (12) et le premier appareil (10),
. une position (1602), dite passive, dans laquelle il libère au moins ce rouleau (121) en vue d'autoriser un déplacement relatif entre ledit élément sans fin (12) et ledit premier appareil (10),
- un élément d'appui (162) de l'élément sans fin (12) qui est situé de manière à s'opposer à un déplacement dudit élément sans fin (12), lorsque l'élément denté et mobile (161) est déplacé dans sa position (1601) dite active,
- un organe commandé (163) de déplacement énergique de l'élément denté et mobile (161) entre ses deux positions (1601, 1602) active et passive.

3. Installation selon la revendication 2 **caractérisée en ce que** l'élément denté mobile (161) situé latéralement à l'élément sans fin (12) est constitué par un secteur denté articulé sur un axe (164), de manière à osciller entre les deux positions prédéfinies dites active (1601) et passive (1602).

4. installation, selon l'une quelconque des revendications 1 à 3 **caractérisée en ce que :**
- d'une part, l'élément sans fin (12) forme une boucle sur les deux éléments de renvoi (13, 14) et présente deux brins sensiblement parallèles (121, 122), et
- d'autre part, le moyen de liaison locale débrayable (16) du premier appareil (10) coopère avec l'un des brins et le moyen de liaison locale débrayable (17) du second appareil (11) coopère avec l'autre brin, de manière telle que lorsque ces appareils (10, 11) sont simultanément embrayés sur l'élément sans fin (12), ils se déplacent dans des directions opposées.

5. Installation de chargement séquentiel de barres de matériau selon l'une des revendications 1 à 4 **caractérisée en ce qu**'elle comprend :
- un cinquième dispositif (19) de commande programmable au moins desdits troisième et quatrième dispositif (7, 8), de manière à engendrer sélectivement,
. le déplacement de la barre (2), au moins dans le dispositif (5) de guidage en translation, de manière à la disposer dans une position dite d'attente de chargement (200),
. la poussée de la barre (2), par séquence, à la fois à travers ledit dispositif (5) de guidage en translation et la partie rotative tubulaire (3), depuis ladite position dite d'attente de chargement (200), jusqu'à ce qu'un nombre déterminé de pièces ait été réalisé,
. l'extraction de la partie rotative tubulaire (3) d'un tronçon de barre (201) qui n'aurait pas été utilisé dans la machine d'usinage (4),
. le déplacement dudit tronçon de barre (201) non utilisé jusqu'à une situation de recul maximum, telle celle d'un poste (9) d'évacuation de ce tronçon de barre (201).

6. Installation selon la revendication 5 **caractérisée en ce que** le cinquième dispositif (19) de commande programmable et le moyen de commande sélective (18) des moyens de liaison locale débrayable (16, 17) avec l'élément sans fin (12) produisent des ordres de commande en relation avec le fonctionnement desdits troisième et quatrième dispositif (7 et 8) de manière telle que la séquence d'opérations suivante soit assurée, en prenant comme référence une position desdits premier et second appareils (10, 11) qui consiste en une position de recul maximum (104, 114) de chacun de ces appareils (10, 11), par rapport à la machine d'usinage (4) :
- le maintien en une position débrayée du moyen de liaison débrayable (17) du deuxième appareil (11) avec l'élément sans fin (12),
- l'ouverture de la pince (102) de préhension transversale qui est portée par le premier appareil (10),
- la sélection et le prélèvement d'une barre (2) dans le dispositif de stockage (6), puis le dépôt de cette barre (2) dans le dispositif (5) de guidage en translation,
- la fermeture de la pince (102) de préhension qui est portée par le premier appareil (10),
- le déplacement du premier appareil (10) et d'une barre (2) retenue dans sa pince (102), et ce, sur la première distance (D1), de manière à disposer la barre (2) dans sa position dite d'attente de chargement (200),
- l'ouverture de la pince (102) de préhension transversale de l'extrémité arrière de la barre (2) qui est portée par le premier appareil (10),
- l'actionnement en position débrayée du moyen de liaison débrayable (16) du premier appareil (10) avec l'élément sans fin (12),
- l'actionnement en position embrayée du moyen de liaison débrayable (17) du deuxième appareil (11) avec l'élément sans fin (12),
- le déplacement dudit deuxième appareil (11), sur une première fraction de la deuxième distance (D2), et ce, jusqu'à l'accouplement de sa pince tournante (112) de maintien avec la partie arrière (202) de la barre (2) telle que située dans sa position dite d'attente de chargement (200),
- le déplacement du deuxième appareil (11), sur une deuxième fraction de la deuxième distance (D2), et ce, de manière à engendrer la poussée de la barre (2), par séquence, à la fois à travers ledit dispositif (5) de guidage en translation et la partie rotative tubulaire (3), depuis ladite position dite d'attente de chargement (200) de la barre (2), jusqu'à ce qu'un nombre déterminé de pièces ait été réalisé.

7. Installation selon la revendication 6 **caractérisée en ce que** le cinquième dispositif (19) de commande programmable et le moyen de commande sélective (18) des moyens de liaison locale débrayable (16, 17) avec l'élément sans fin (12) produisent des ordres de commande en relation avec le fonctionnement desdits troisième et quatrième dispositif (7 et 8) de manière telle que, lorsqu'un nombre déterminé de pièces a été réalisé la séquence d'opérations suivante soit assurée :
- le déplacement du deuxième appareil (11) induisant son retour vers une position telle qu'un tronçon de barre (201) qui n'aurait pas été utilisé dans la machine d'usinage (4) soit extrait de sa partie rotative tubulaire (3) et se retrouve placé en position d'être transversalement saisi par la pince de préhension transversale (102) du premier appareil (10),
- la fermeture de la pince (102) de préhension transversale sur le tronçon de barre (201) non utilisé,
- le déplacement dudit second appareil (11) vers sa position dite de recul maximum (114) de manière à induire, d'une part, la libération du tronçon de barre (201) jusqu'alors retenu dans la pince tournante (112) et, d'autre part, le placement dudit deuxième appareil (11) dans sa positon de recul maximum (114),
- l'actionnement en position débrayée du moyen de liaison débrayable (17) du deuxième appareil (11) avec l'élément sans fin (12),
- l'actionnement en position embrayée du moyen de liaison débrayable (16) du premier appareil (11) avec l'élément sans fin (12),
- le déplacement dudit premier appareil (10) vers sa position de recul maximum (104) et le placement dudit deuxième dispositif (11) dans ladite position,
- l'ouverture de la pince (102) de préhension transversale qui est portée par le premier appareil (10).

## Claims

1. Installation for sequential loading of bars (2) of material in a tubular rotary part (3) of a machining centre (4) for these bars (2), this installation comprising a fourth device (8) intended to ensure the functions of displacement in translation of a bar (2) situated in a first device (5) for guiding in translation of this bar (2) along a guide axis (300),
this device (8) for displacement in translation of a bar (2) comprising
- a first apparatus (10) mobile in translation according to a first direction (101) substantially parallel to the guide axis (300) for the bar (2) and intended to be displaced over a first predetermined distance (D1), and a second apparatus (11) mobile in translation in a second direction (111) substantially parallel to the guide axis (300) for the bar (2) and intended to be displaced over a second predetermined distance (D2), the displacements of each of these first and second apparatuses (10, 11) being ensured by circulation of an endless element (12) on reversal mechanisms (13, 14), and this, during the driving in rotation of one of said reversal mechanisms by a motive unit (15), a functional assembly made up of the endless element (12) and the reversal mechanisms (13, 14), being common to said first (10) and second apparatus (11) and extending over a distance (D3) at least sufficiently to ensure the successive displacements of each of said first and second apparatus (10, 11) over the first distance (D1) and the second distance (D2) of displacement desired for each of them, and the apparatuses referred to as first (10) and second (11) each being equipped with a controlled means of disengageable local connection (16, 17) with the endless element (12), and
- a means of selective control (18) of the disengageable local connection means (16, 17) with the endless element (12),
this installation for sequential loading of bars of material being
**characterised in that**:
- the predetermined guide axis (300) is substantially coaxial to a tubular rotary part (3) of the machining centre (4) which must be traversed by said bar (2) with a view to machining pieces,
- the installation comprises a second device (6) for storage of a plurality of bars (2), and a third device (7) for selecting and withdrawing the bar (2) in the storage device (6), then placing this bar (2) in the device (5) for guiding in translation, and
- the fourth device (8), referred to as device of displacement in translation of the bar (2) placed in the device (5) for guiding in translation, implements:
• on the one hand, the first apparatus (10) which, mobile in translation in a first direction (101) substantially parallel to the guide axis (300) for the bar (2), bears a gripper (102) for transverse gripping of the rear end of a bar (2), and
• on the other hand, the second apparatus (11) which, mobile in translation in the second direction (111) substantially parallel to the guide axis (300) for the bar (2), bears a revolving gripper (112) for holding the rear end of the bar (2).

2. Installation according to claim 1, the device (8) intended to ensure functions of displacement of a bar (2) and being intended to be used with an endless element which consists in a chain of type having cylindrical rollers (121) and lateral links (122), this installation being **characterised in that** the disengageable local connection means (16) that equips said first apparatus (10) provided with a gripper (102) for transverse gripping of the rear end of a bar (2), comprises:
- a toothed and mobile element (161) situated laterally with respect to the chain and guided between two positions which are
• a position (1601), referred to as active, in which it retains at least one cylindrical roller (121) of the endless element (12) with a view to preventing any relative displacement between this endless element (12) and the first apparatus (10),
• a position (1602), referred to as passive, in which it frees at least this roller (121) with a view to allowing a relative displacement between said endless element (12) and said first apparatus (10),
- an element for pressing (162) of the endless element (12) which is situated in such a way as to oppose a displacement of said endless element (12), when the toothed and mobile element (161) is moved into its position (1601) referred to as active,
- a controlled unit (163) of forceful displacement of the toothed and mobile element (161) between its two active and passive positions (1601, 1602).

3. Installation according to claim 2, **characterised in that** the toothed mobile element (161) situated laterally with respect to the endless element (12) is made up of an articulated toothed sector on a shaft (164) in such a way as to swing back and forth between the two predefined positions, referred to as active (1601) and passive (1602).

4. Installation according to any one of the claims 1 to 3, **characterised in that** :
- on the one hand, the endless element (12) forms a loop on the two reversal mechanisms (13, 14) and has two substantially parallel sides (121, 122), and
- on the other hand, the disengageable local connection means (16) of the first apparatus (10) co-operates with one of the sides, and the disengageable local connection means (17) of the second apparatus (11) co-operates with the other side, in such a way that when these apparatuses (10, 11) are engaged simultaneously on the endless element (12), they displace themselves in opposite directions.

5. Installation for sequential loading of bars of material according to one of the claims 1 to 4, **characterised in that** it comprises :
- a fifth device (19) of programmable control of at least said third and fourth device (7, 8), in such a way as to bring about selectively,
• the displacement of the bar (2), at least in the device (5) for guiding in translation, in such a way as to dispose it in a position referred to as ready-to-load (200),
• the pushing of the bar (2), by sequence, at one and the same time through said device (5) for guiding in translation and the tubular rotary part (3), from said position referred to as ready-to-load (200), until a predetermined number of pieces have been made,
• the extraction from the tubular rotary part (3) of a section of bar (201) which has not been used in the machining centre (4),
• the displacement of said unused section of bar (201) until a situation of maximum backward movement such as that of a station (9) of discharge of this section of bar (201).

6. Installation according to claim 5, **characterised in that** the fifth device (19) of programmable control and the means of selective control (18) of the means of disengageable local connection (16, 17) with the endless element (12) produce command sequences in relation to the operation of said third and fourth device (7 and 8) in such a way that the following sequence of operations is ensured by taking as reference a position of said first and second apparatuses (10, 11) which consists in a position of maximum backward movement (104, 114) of each of these apparatuses (10, 11), in relation to the machining centre (4) :
- the holding in a disengaged position of the disengageable connection means (17) of the second apparatus (11) with the endless element (12),
- the opening of the gripper (102) for transverse gripping which is borne by the first apparatus (10),
- the selecting and the withdrawal of a bar (2) in the storage device (6), then the deposit of this bar (2) in the device (5) for guiding in translation,
- the closing of the gripper (102) for gripping which is borne by the first apparatus (10),
- the displacement of the first apparatus (10) and of a bar (2) held in its gripper (102), and this, over the first distance (D1), in such a way as to dispose the bar (2) in its position referred to as ready-to-load (200),
- the opening of the gripper (102) for transverse gripping of the rear end of the bar (2) which is borne by the first apparatus (10),
- the actuation in disengaged position of the disengageable connection means (16) of the first apparatus (10) with the endless element (12),
- the actuation in engaged position of the disengageable connection means (17) of the second apparatus (11) with the endless element (12),
- the displacement of said second apparatus (11), over a first portion of the second distance (D2), and this until the coupling of its revolving gripper (112) for holding with the rear part (202) of the bar (2) so as to be situated in its position referred to as ready-to-load (200),
- the displacement of the second apparatus (11), over a second portion of the second distance (D2), and this so as to bring about the pushing of the bar (2), by sequence, at one and the same time through said device (5) for guiding in translation and the tubular rotary part (3), from said position referred to as ready-to-load (200) of the bar (2), until a predetermined number of pieces have been made.

7. Installation according to claim 6, **characterised in that** the fifth device (19) of programmable control and the means of selective control (18) of the disengageable local connection means (16, 17) with the endless element (12) produce command sequences in relation to the operation of said third and fourth device (7 and 8) in such a way that, when a predetermined number of pieces have been made, the following sequence of operations is ensured:
- the displacement of the second apparatus (11) leading to its return toward a position such that a section of bar (201) that has not been used in the machining centre (4) is extracted from its tubular rotary part (3) and is found placed in position to be transversely seized by the gripper for transverse gripping (102) of the first apparatus (10),
- the closing of the gripper (102) for transverse gripping on the section of bar (201) not used,
- the displacement of said second apparatus (11) towards its position referred to as maximum backward movement (114) in such a way as to bring about, on the one hand, the freeing of the section of bar (201) held at the time in the revolving gripper (112) and, on the other hand, the placement of said second apparatus (11) in its position of maximum backward movement (114),
- the actuation in disengaged position of the disengageable means of connection (17) of the second apparatus (11) with the endless element (12),
- the actuation in engaged position of the disengageable means of connection (16) of the first apparatus (11) with the endless element (12),
- the displacement of said first apparatus (10) towards its position of maximum backward movement (104) and the placement of said second device (11) in said position,
- the opening of the gripper (102) for transversal gripping which is borne by the first apparatus (10).

## Patentansprüche

1. Vorrichtung zur sequenziellen Zuführung von Stangen (2) eines Materials in einen drehenden rohrförmigen Teil (3) einer Maschine (4) zur Bearbeitung dieser Stangen (2), wobei diese Anlage eine vierte Vorrichtung (8) aufweist, die dazu bestimmt ist, die Funktionen zur translatorischen Förderung einer Stange (2) zu gewährleisten, die sich in einer ersten Vorrichtung (5) zur translatorischen Führung dieser Stange (2) entlang einer Führungsachse (300) befindet,
wobei diese Vorrichtung (8) zur translatorischen Förderung einer Stange (2) Folgendes aufweist:
- ein erstes Gerät (10), das in einer ersten Richtung (101), die im Wesentlichen zur Führungsachse (300) der Stange (2) parallel ist, translatorisch beweglich und dazu bestimmt ist, auf einer ersten festgelegten Distanz (D1) verfahren zu werden, und ein zweites Gerät (11), das in einer zweiten Richtung (111), die im Wesentlichen zur Führungsachse (300) der Stange (2) parallel ist, translatorisch beweglich und dazu bestimmt ist, auf einer zweiten festgelegten Distanz (D2) verfahren zu werden, wobei die Verfahrbewegungen jedes dieser ersten und zweiten Gerätes (10, 11) durch den Umlauf eines Endloselementes (12) auf Umlenkelementen (13, 14) gewährleistet werden und dies beim drehenden Antrieb eines der genannten Umlenkelemente durch das Antriebsorgan (15), eine Funktionsbaugruppe, die aus dem Endloselement (12) und den Umlenkelementen (13, 14) besteht, die gemeinsam zum genannten ersten (10) und zweiten Gerät (11) gehören, und die sich über eine Distanz (D3) erstrecken, die mindestens groß genug ist, um die aufeinander folgenden Verfahrbewegungen jedes der genannten ersten und zweiten Geräte (10, 11) auf der für jedes gewünschten ersten (D1) und zweiten Distanz (D2) der Verfahrstrecke zu gewährleisten, sowie die sogenannten (10) ersten und zweiten (11) Geräten, die jeweils mit einem betätigten Mittel zur lokalen auskuppelbaren Verbindung (16, 17) mit dem Endloselement (12) ausgerüstet sind und
- ein Mittel (18) zur wahlweisen Betätigung der Mittel zur lokalen auskuppelbaren Verbindung (16, 17) mit dem Endloselement (12),
wobei diese Anlage zum sequenziellen Beladen mit Stangen eines Materials **dadurch gekennzeichnet ist, dass**
- die festgelegte Führungsachse (300) zum drehenden rohrförmigen Teil (3) der Bearbeitungsmaschine (4), der von der genannten Stange (2) zur Bearbeitung der Werkstücke durchquert werden muss, im Wesentlichen koaxial ist,
- die Anlage eine zweite Magazinvorrichtung (6) zur Lagerung einer Mehrzahl von Stangen (2) und eine dritte Vorrichtung (7) zur Auswahl und zur Entnahme der Stange (2) aus der Magazinvorrichtung (6) und zum späteren Ablegen dieser Stange (2) in die Vorrichtung (5) zur translatorischen Führung aufweist und
- die vierte Vorrichtung (8), die sogenannte Vorrichtung zur translatorischen Förderung der Stange (2), die in die Vorrichtung (5) zur translatorischen Führung eingesetzt wird, Folgendes einsetzt:
- einerseits das erste, in der ersten Richtung (101), die im Wesentlichen zur Führungsachse (300) der Stange (2) parallel ist, translatorisch bewegliche Gerät (10), an dem eine Greiferzange (102) zum seitlichen Erfassen des hinteren Endes der Stange (2) sitzt und
- andererseits das zweite, in einer zweiten Richtung (111), die im Wesentlichen zur Führungsachse (300) der Stange (2) parallel ist, translatorisch bewegliche Gerät (11), an dem eine drehbare Zange (112) zum Festhalten des hinteren Endes der Stange (2) sitzt.

2. Anlage nach Anspruch 1, bei der die zur Gewährleistung der Funktionen der Förderung der Stange (2) bestimmte Vorrichtung (8) dazu bestimmt ist, zusammen mit einem Endloselement verwendet zu werden, das aus einer Kette mit zylindrischen Rollen (121) und seitlichen Kettengliedern (122) besteht, wobei diese Anlage **dadurch gekennzeichnet ist, dass** das Mittel zur lokalen auskuppelbaren Verbindung (16), mit dem das erste, mit einer Greiferzange (102) zum seitlichen Erfassen des hinteren Endes der Stange (2) ausgerüstete Gerät (10) versehen ist, Folgendes aufweist:
- ein gezahntes und bewegliches Element (161), das sich seitlich von der Kette befindet und zwischen zwei Positionen geführt wird, davon
. eine Position (1601), die sogenannte Arbeitsposition, in der es mindestens eine zylindrische Rolle (121) des Endloselementes (12) festhält, um jegliche Verfahrbewegung zwischen diesem Endloselement (12) und dem ersten Gerät (10) zu verhindern,
. eine Position (1602), die sogenannte Ruheposition, in der es mindestens diese Rolle (121) freigibt, um eine Verfahrbewegung zwischen dem genannten Endloselement (12) und dem ersten Gerät (10) zu gestatten,
- ein Stützelement (162) für das Endloselement (12), das so angeordnet ist, dass es sich der Bewegung des genannten Endloselementes (12) widersetzt, wenn das gezahnte und bewegliche Element (161) in seine sogenannte Arbeitsposition (1601) bewegt wird,
- ein betätigtes Organ (163) zur kräftigen Bewegung des gezahnten und beweglichen Elementes (161) zwischen seiner Arbeits- und seiner Ruheposition (1601, 1602).

3. Anlage nach Anspruch 2, **dadurch gekennzeichnet, dass** das gezahnte bewegliche Element (161), das seitlich von dem Endloselement (12) angeordnet ist, von einem gezahnten, um die Achse (164) schwenkbar gelagerten Sektor gebildet wird, so dass es zwischen der vorgegebenen sogenannten Arbeitsposition (1601) und Ruhepositionen (1602) hin- und herschwenken kann.

4. Anlage nach einem der Ansprüche 1 bis 3, **dadurch gekennzeichnet, dass**:
- einerseits das Endloselement (12) eine Schleife um die beiden Umlenkelemente (13, 14) bildet und zwei im Wesentlichen parallele Stränge (121, 122) aufweist und
- andererseits das Mittel zur lokalen auskuppelbaren Verbindung (16) des ersten Gerätes (10) mit einem der Stränge und dem Mittel zur lokalen auskuppelbaren Verbindung (17) des zweiten Gerätes (11) derart mit dem anderen Strang zusammenwirkt, dass diese Geräte (10, 11) sich in entgegensetzte Richtung bewegen, wenn sie gleichzeitig an das Endloselement (12) angekoppelt werden.

5. Vorrichtung zur sequenziellen Zuführung von Stangen eines Materials nach einem der Ansprüche 1 bis 4, **dadurch gekennzeichnet, dass** sie Folgendes aufweist:
- eine fünfte Vorrichtung (12) zur programmierbaren Betätigung von mindestens der genannten dritten und vierten Vorrichtung (7, 8), damit wahlweise Folgendes erfolgt,
- die Förderung der Stange (2) zumindest in die Vorrichtung (5) zur translatorischen Führung der Stange, so dass sie in einer Position, der sogennanten Warteposition Laden (200), abgelegt wird,
- das Schieben der Stange (2) in Folgen von der genannten sogenannten Warteposition Laden (200) aus sowohl durch die genannte Vorrichtung (5) zur translatorischen Führung der Stange als auch durch den drehenden rohrförmigen Teil (3) bis eine bestimmte Anzahl an Werkstücken hergestellt worden ist,
- das Herausziehen eines nicht in der Bearbeitungsmaschine (4) verwendeten Stangenabschnittes (201) aus dem drehenden rohrförmigen Teil (3),
- die Förderung des genannten nicht verwendeten Stangenabschnittes (201) bis in eine maximale Rücklauflage, wie die einer Station (9) zum Auswurf dieses Stangenabschnittes (201).

6. Anlage nach Anspruch 5, **dadurch gekennzeichnet, dass** die fünfte Vorrichtung (19) zur programmierbaren Betätigung und das Mittel zur wahlweisen Betätigung (18) der Mittel zur lokalen auskuppelbaren Verbindung (16, 17) mit dem Endloselement (12) Steuerbefehle in Verbindung mit der Funktion der genannten dritten und vierten Vorrichtung (7 und 8) erzeugen, so dass die folgende Arbeitsfolge gewährleistet wird, indem als Referenz eine Position der genannten ersten und zweiten Geräte (10, 11) benutzt wird, die der maximalen Rücklaufposition (104, 114) jedes dieser Geräte (10, 11) zur Bearbeitungsmaschine (4) entspricht:
- das Halten des auskuppelbaren Mittels (17) des zweiten Gerätes (11) zur Verbindung mit dem Endloselement (12) in einer ausgekuppelten Position,
- das Öffnen der am ersten Gerät (10) sitzenden Greiferzange (102) zum seitlichen Erfassen,
- die Auswahl und die Entnahme einer Stange (2) aus der Magazinvorrichtung (6), dann das Ablegen dieser Stange (2) in der Vorrichtung (5) zur translatorischen Führung,
- das Schließen der am ersten Gerät (10) sitzenden Greiferzange (102),
- das Verfahren des ersten Gerätes (10) und einer in seiner Greiferzange (102) festgehaltenen Stange (2), und dies auf der ersten Distanz (D1), so dass die Stange (2) in ihrer sogenannten Warteposition Laden (200) angeordnet wird,
- das Öffnen der am ersten Gerät (10) sitzenden Greiferzange (102) zum seitlichen Erfassen des hinteren Endes der Stange (2),
- die Betätigung in ausgekuppelter Position des Mittels zur auskuppelbaren Verbindung (16) des ersten Gerätes (10) mit dem Endloselement (12),
- die Betätigung in ausgekuppelter Position des Mittels zur auskuppelbaren Verbindung (17) des zweiten Gerätes (11) mit dem Endloselement (12),
- das Verfahren des genannten zweiten Gerätes (11) um eine erste Teilstrecke der zweiten Distanz (D2) und dies, bis zur Ankupplung seiner drehenden Zange (112) zum Halten des hinteren Endes (202) der Stange (2), die sich in ihrer sogenannten Warteposition Laden (200) befindet,
- das Verfahren des zweiten Gerätes (11) um eine zweite Teilstrecke der zweiten Distanz (D2) und dies so, dass das Schieben der Stange (2) in Folgen von der genannten sogenannten Warteposition Laden (200) aus sowohl durch die genannte Vorrichtung (5) zur translatorischen Führung der Stange (2) als auch durch den drehenden rohrförmigen Teil (3) erfolgt, bis eine bestimmte Anzahl an Werkstücken hergestellt worden ist.

7. Anlage nach Anspruch 6, **dadurch gekennzeichnet, dass** die fünfte Vorrichtung (19) zur programmierbaren Betätigung und das Mittel zur wahlweisen Betätigung (18) der Mittel zur lokalen auskuppelbaren Verbindung (16, 17) mit dem Endloselement (12) Steuerbefehle in Verbindung mit der Funktion der genannten dritten und vierten Vorrichtung (7 und 8) erzeugen, so dass, wenn eine bestimmte Anzahl an Werkstücken hergestellt worden ist, die folgende Arbeitsfolge gewährleistet wird:
- das Verfahren des zweiten Gerätes (11), die zu seiner Rückkehr in eine solche Position führt, in der ein nicht in der Bearbeitungsmaschine (4) verwendeter Stangenabschnitt (201) aus dem drehenden rohrförmigen Teil (3) herausgezogen und so positioniert wird, dass er von der seitlich fassenden Greiferzange (102) des ersten Gerätes (10) seitlich erfasst werden kann,
- das Schließen der seitlich fassenden Greiferzange (102) um den nicht verwendeten Stangenabschnitt (201),
- das Verfahren des genannten zweiten Gerätes (11) zu seiner sogenannten maximalen Rücklaufposition (114), was einerseits zur Freigabe des bisher von der drehenden Zange (112) festgehaltenen Stangenabschnitts (201) und andererseits zur Positionierung des genannten zweiten Gerätes (11) in seine maximale Rücklaufposition (114) führt,
- die Betätigung in ausgekuppelter Position des Mittels zur auskuppelbaren Verbindung (17) des zweiten Gerätes (11) mit dem Endloselement (12),
- die Betätigung in ausgekuppelter Position des Mittels zur auskuppelbaren Verbindung (16) des ersten Gerätes (11) mit dem Endloselement (12),
- das Verfahren des genannten ersten Gerätes (10) zu seiner maximalen Rücklaufposition (104) und die Positionierung der genannten zweiten Vorrichtung (11) in die genannte Position,
- das Öffnen der am ersten Gerät (10) sitzenden Greiferzange (102) zum seitlichen Erfassen.
